# EUROPEAN PATENT SPECIFICATION

(11) **EP 2 455 509 B1**
(45) Date of publication and mention of the grant of the patent: **27.03.2019**
(21) Application number: 10780689.5
(22) Date of filing: 27.05.2010
(51) Int. Cl.: C23C 2/12, C22C 18/04, C22C 21/10, C23C 2/06, B32B 15/01

(54) **HOT-DIP AL-ZN PLATED STEEL SHEET**
FEUERVERZINKTES AL-ZN-PLATTIERTES STAHLBLECH
FEUILLE D'ACIER REVÊTUE D'AL-ZN PAR IMMERSION À CHAUD

(30) Priority: 29.05.2009 JP 2009129774
(43) Date of publication of application: 23.05.2012
(73) Proprietor: JFE Steel Corporation, Tokyo 100-0011 (JP)
(72) Inventor: OOI, Toshihiko, Tokyo 100-0011 (JP); NAKAMARU, Hiroki, Tokyo 100-0011 (JP); OOTSUKA, Shinji, Tokyo 100-0011 (JP); MASUOKA, Hiroyuki, Tokyo 100-0011 (JP); YOSHIDA, Masahiro, Tokyo 100-0011 (JP)
(74) Representative: Grünecker Patent- und Rechtsanwälte PartG mbB
(86) International application number: PCT/JP2010/059403
(87) International publication number: WO 2010/137736

(56) References cited:
- EP-A1- 0 148 740
- EP-A1- 1 184 478
- EP-A1- 1 225 246
- EP-A1- 1 997 927
- JP-A- 2001 316 791
- JP-A- 2002 012 959
- JP-A- 2002 129 300
- JP-A- 2005 272 967
- JP-A- 2006 283 155

## Description

### [Technical Field]

The present invention relates to a hot dip Al-Zn coated steel sheet exhibiting excellent corrosion resistance, in particular a hot dip Al-Zn coated steel sheet exhibiting excellent bonded portion corrosion resistance.

### [Background Art]

As described in PTL 1, a hot dip Al-Zn coated steel sheet containing 20 to 95 percent by mass of Al in a coated film exhibits excellent corrosion resistance as compared with a galvanized steel sheet. Therefore, in recent years, the demand has increased in the fields with an emphasis on construction materials, e.g., roofs and walls, which are exposed to the outdoors for a long term.

This hot dip Al-Zn coated steel sheet is produced in a continuous hot dip coating unit in a manner described below, where a hot rolled steel sheet subjected to pickling and descaling or a cold rolled steel sheet obtained by further cold rolling the hot rolled steel sheet serves as a substrate steel sheet.

In the continuous hot dip coating unit, initially, the substrate steel sheet is heated to a predetermined temperature in an annealing furnace kept in a reducing atmosphere, so as to perform removal of rolling oil and the like adhered to a steel sheet surface and removal of an oxide film through reduction at the same time with annealing. Subsequently, the sheet is passed through a snout with a lower end dipped in a coating bath and, thereby, the substrate steel sheet is dipped into the hot dip coating bath containing a predetermined concentration of Al. Then, the steel sheet dipped in the coating bath is pulled upward from the coating bath through a sink roll. The amount of deposition of coating is adjusted by spraying a pressurized gas toward the surface of the steel sheet from a gas wiping nozzle disposed above the coating bath. Thereafter, cooling is performed with a cooling apparatus, so as to obtain a hot dip Al-Zn coated steel sheet provided with a coated film with a predetermined amount and composition.

At this time, in order to ensure desired quality and material of the coating, the heat treatment condition and the atmosphere condition of the annealing furnace and the operating condition, e.g., the coating bath composition and the cooling rate after coating, regarding the continuous hot dip coating unit are accurately controlled within desired control ranges.

The coated film of the hot dip Al-Zn coated steel sheet produced as described above is composed of an alloy phase present at the interface to the substrate steel sheet and an upper layer present thereon. Furthermore, the upper layer is composed of portions in which supersaturated Zn is primarily contained and Al is dendrite-solidified and the remainder portions of gaps between dendrite. The dendrite solidification portions are laminated in the film thickness direction of the coated film. The path of proceeding of corrosion from the surface becomes complicated because of such a specific film structure and, therefore, corrosion does not reach the substrate steel sheet easily. Consequently, the hot dip Al-Zn coated steel sheet exhibits excellent corrosion resistance as compared with that of a galvanized steel sheet having the same coated film thickness.

Meanwhile, usually, incidental impurities, Fe eluted from a steel sheet and apparatuses in the coating bath, and Si (about 3 percent by mass relative to Al) to suppress excessive growth of an alloy phase are added to the coating bath, and Si is present in the form of an intermetallic compound in the alloy phase or in the form of an intermetallic compound, a solid solution, or a simple substance in the upper layer. Then, growth of the alloy phase at an interface of the hot dip Al-Zn coated steel sheet is suppressed and the thickness of the alloy phase becomes about 1 to 2 µm. In the case where the coated film thickness is the same, as the alloy phase becomes thinner, the upper layer effective in improving the corrosion resistance becomes thicker, so that suppression of growth of the alloy phase contributes to an improvement in corrosion resistance. Moreover, the alloy phase is harder than the upper layer and functions as a starting point of cracking during working. Therefore, suppression of growth of the alloy phase reduces an occurrence of cracking and exerts an effect of improving bendability. In this regard, the substrate steel sheet is exposed at a generated cracking portion, so that the corrosion resistance is poor. Therefore, reduction in occurrence of cracking improves the corrosion resistance of a bent portion.

### [Citation List]

### [Patent Literature]

PTL 1: Japanese Examined Patent Application Publication No. 46-7161

The patent documents EP1225246, JP 2002012959 and JP2005272967 describe Zn-Al based alloys plated steels and methods for their manufacturing to provide steel products with good corrosion resistance and decreased plating defects. The EP1184478 describes a surface treated steel product prepared by plating an aluminum-based alloy producing a coating comprising intermetallic compounds homogeneously distributed in the coating.

### [Summary of Invention]

### [Technical Problem]

As described above, hitherto, the hot dip Al-Zn coated steel sheet has been frequently used in the field of construction materials, e.g., roofs and walls, which are exposed to the outdoors for a long term, because of the excellent corrosion resistance thereof.

Moreover, the case where the hot dip Al-Zn coated steel sheet is used in the automobile field have increased. In the case where use of the hot dip Al-Zn coated steel sheet in the automobile field is intended, there is a problem as described below.

In recent years, as part of measures against global warming, it has been required to reduce the weight of a car body, enhance fuel economy, and decrease CO₂ output. Consequently, weight reduction by using a high strength steel sheet and gauge down by improving the corrosion resistance of the steel sheet have been desired intensely. Here, in general, in the case where the hot dip coated steel sheet is used in the field of construction materials, the hot dip coated steel sheet is supplied to customers, e.g., construction material makers, while being in the state of a chemical conversion-treated steel sheet subjected to a chemical conversion treatment following the coating with a continuous hot dip coating unit or a painted steel sheet further subjected to painting with a coil painting unit. Meanwhile, in the case of use in the automobile field, the hot dip coated steel sheet in the state of being subjected to coating with the continuous hot dip coating unit is supplied to automobile makers and is worked into the shape of a car body component there. Thereafter, a chemical conversion treatment and electrodeposition are performed. Consequently, in the case of use in the automobile field, a bonded portion in which steel sheets overlap each other is chemical conversion treatment and the painting appropriately.

In consideration of the above-described circumstances, it is an object of the present invention to provide a hot dip Al-Zn coated steel sheet exhibiting excellent corrosion resistance, in particular excellent bonded portion corrosion resistance.

### [Solution to Problem]

In order to solve the above-described problems, the present inventors performed intensive researches over and over again. As a result, it was found that an unprecedentedly excellent corrosion resistance was obtained by containing Ca or Ca and Mg in a coated film.

The present invention has been made on the basis of the above-described findings and relates to a hot dip Al-Zn coated steel sheet according to the appended claims.

By the way, in the present invention, steel sheets in which steel sheets are coated with Al-Zn by a coating treatment method are generically called hot dip Al-Zn coated steel sheets regardless of whether an alloying treatment is performed or not. That is, the hot dip Al-Zn coated steel sheets in the present invention include both the hot dip Al-Zn coated steel sheet not subjected to the alloying treatment and the hot dip Al-Zn coated steel sheet subjected to the alloying treatment.

### [Advantageous Effects of Invention]

According to the present invention, a hot dip Al-Zn coated steel sheet exhibiting excellent corrosion resistance, in particular bonded portion corrosion resistance, is obtained. Furthermore, application of the hot dip Al-Zn coated steel sheet according to the present invention to a high strength steel sheet can ensure compatibility between weight reduction and excellent corrosion resistance in the automobile field.

### [Brief Description of Drawings]

Fig. 1 is a diagram showing a bonded material test piece.
Fig. 2 is a diagram showing a cycle of a corrosion test.
Fig. 3 is a diagram showing the results of analysis through a coated film with a glow discharge optical emission spectrometry apparatus.

### [Description of Embodiments]

A coated steel sheet related to the present invention is a hot dip Al-Zn coated steel sheet containing 45 to 95 percent by mass of Al in a coated film. The range of the Al content in the coated film is 45 to 85 percent by mass from the viewpoint of balance between performance (corrosion resistance, workability, and the like) and operation. Specifically, when Al is 45 percent by mass or more, regarding a coated film composed of two layers of an alloy phase present at an interface to a substrate steel sheet and an upper layer present on the alloy phase, dendrite solidification of Al occurs in the upper layer. Consequently, the upper layer side is composed of portions in which supersaturated Zn is primarily contained and Al is dendrite-solidified and the remainder portions of gaps between dendrite. The dendrite solidification portions take on a structure which is laminated in the film thickness direction of the coated film and which exhibits excellent corrosion resistance and workability. Al is specified to be 45 percent by mass or more in order to obtain such a coated film structure stably. Meanwhile, if Al is more than 95 percent by mass, in the case where basis steel is exposed, the corrosion resistance is degraded because the amount of Zn having a sacrificial protection function is small relative to Fe. In general, as the amount of deposition of coating is reduced, the basis steel tends to be exposed. In order to obtain sufficient corrosion resistance even when the amount of deposition is small, it is preferable that Al is specified to be 85 percent by mass or less. Meanwhile, regarding the hot dip Al-Zn coating, as the Al content increases, the temperature of a coating bath (hereafter referred to as a bath temperature) becomes high, so that there is a concern about an operational problem. However, in the case where the above-described Al content is employed, the bath temperature is appropriate and, therefore, there is no problem.

Moreover, in the present invention, 0.01 to 10 percent by mass of Ca is contained in the above-described coated film. Alternatively, 0.01 to 10 percent by mass of Ca and Mg in total are contained in the above-described coated film.

In the case where Ca or Ca and Mg are contained in the coated film, these elements are contained in corrosion products generated in a bonded portion, so that the corrosion products are stabilized. Consequently, an effect of retarding proceeding of corrosion thereafter is exerted. If the content of Ca or the total content of Ca and Mg is less than 0.01 percent by mass, this effect is not exerted. On the other hand, if the content is more than 10 percent by mass, the effects are saturated and, in addition, an increase in cost associated with an increase in the amount of addition and difficulty in controlling the bath composition are brought about. Therefore, the content of Ca or Ca and Mg contained in the coated film is specified to be 0.01 percent by mass or more and 10 percent by mass or less.

Furthermore, the above-described coated film is composed of an upper layer and an alloy phase present at the interface to a substrate steel sheet and Ca or Ca and Mg are present in the above-described upper layer. In the case where the coated film is composed of the alloy phase present at the interface to the substrate steel sheet and the upper layer present on the alloy phase, and Ca or Ca and Mg contained in the coated film are specified to be primarily present in the upper layer, as described above, these elements exert sufficiently an effect of stabilizing corrosion products. In the case where Ca and Mg are present not in the alloy phase at the interface, but in the upper layer, stabilization of corrosion products at an initial stage of corrosion is facilitated and proceeding of corrosion thereafter is retarded favorably.

The alloy phase and the upper layer according to the present invention can be identified easily by polishing and observing a cross-section of the coated film with a scanning electron microscope or the like. As for a polishing method and an etching method of the cross-section, there are several methods, and any method may be employed insofar as the method is used for observation of the coated film cross-section. Presence of Ca or Ca and Mg in the upper layer is identified by analysis through a coated film with a glow discharge optical emission spectrometry apparatus. In this regard, presence of Ca or Ca and Mg primarily in the upper layer can be identified by, for example, examining the distribution in the coated film thickness direction of Ca or Ca and Mg on the basis of the results of analysis through a coated film with the above-described glow discharge optical emission spectrometry apparatus. However, the use of the glow discharge optical emission spectrometry apparatus is no more than an example, and any method may be employed insofar as the presence or absence and distribution of Ca or Ca and Mg in the coated film can be examined.

The presence of Ca or Ca and Mg in the upper layer is identified by the fact that 90% or more of the whole detected peaks of Ca or Ca and Mg are detected not in the alloy phase present at the interface, but in the upper layer when analysis through the coated film is performed with the glow discharge optical emission spectrometry apparatus. The method for identifying this is not specifically limited and any method may be employed insofar as the method can detect the distribution in the depth direction of elements in the coated film.

Moreover, from the viewpoint of exerting the effect of stabilizing corrosion products sufficiently, it is preferable that a high proportion of Ca or Ca and Mg contained in the coated film are present in the surface layer side as compared with that in the substrate steel sheet side, where the above-described coated film is divided into two equal parts, the surface layer side and the substrate steel sheet side, in the thickness direction on the basis of a thickness. In the case where a high proportion of Ca or Ca and Mg are present in the surface layer side, Ca or Mg is contained in corrosion products from the initial stage of corrosion and, therefore, corrosion products can be further stabilized.

In this regard, the presence of a high proportion of Ca or Ca and Mg in the surface layer side can be identified by, for example, the fact that more than 50% of the whole detected peaks of Ca or Ca and Mg are detected in the surface layer side, where the coated film is divided into two equal parts, the surface layer side and the substrate steel sheet side, on the basis of a thickness when analysis through the coated film is performed with the glow discharge optical emission spectrometry apparatus. The method for identifying this is not specifically limited and any method may be employed insofar as the method can detect the distribution in the depth direction of elements in the coated film.
In addition, Ca or Ca and Mg contained in the coated film include an intermetallic compound with at least one type selected from Zn, Al, and Si. In a process to form the coated film, an Al phase solidifies prior to a Zn phase, so that the intermetallic compound is included in the Zn phase. Consequently, Ca or Mg in the intermetallic compound is always present together with Zn, and in a corrosive environment, Ca or Mg is reliably taken into corrosion products formed by Zn, which is corroded prior to Al, so that stabilization of corrosion products at an initial stage of corrosion is facilitated further efficiently. Examples of intermetallic compounds include at least one type of Al₄Ca, Al₂Ca, Al₂CaSi₂, Al₂CaSi_{1.5}, Ca₃Zn, CaZn₃, CaSi₂, CaZnSi, Al₃Mg₂, MgZn₂, and Mg₂Si. They are favorable because the above-described effect of stabilizing corrosion products are exerted. Most of all, the case where the intermetallic compound contains Si is further preferable because excess Si in the coated layer forms non-solid solution Si in the upper layer of the coating and, thereby,
degradation in bendability can be prevented. In particular, Al₂CaSi₂ and/or Al₂CaSi_{1.5}, where Al: 25 to 95 percent by mass, Ca: 0.01 to 10 percent by mass, and Si: about 3 percent by mass of Al, is an easiest-to-form intermetallic compound and is most preferable because excess Si in the coated layer forms non-solid solution Si in the upper layer of the coating and, thereby, the above-described effect of preventing degradation in bendability is obtained.

Examples of methods for identifying whether Ca or Ca and Mg form an intermetallic compound with at least one type selected from Zn, Al, and Si include a method in which intermetallic compounds thereof are detected by analyzing the coated steel sheet on the basis of wide angle X-ray diffraction from the surface and a method in which detection is performed by analyzing a cross-section of the coated film on the basis of electron beam diffraction in a transmission electron microscope. In this regard, any method other than these methods may be used insofar as the above-described intermetallic compound can be detected.

Next, a method for manufacturing the hot dip Al-Zn coated steel sheet according to the present invention will be described. The hot dip Al-Zn coated steel sheet according to the present invention is produced by a continuous hot dip coating unit or the like, the Al concentration in the coating bath is specified to be 25 to 95 percent by mass, and the Ca content or the total content of Ca and Mg is specified to be 0.01 to 10 percent by mass. The above-described hot dip Al-Zn coated steel sheet can be produced by using the coating bath having such a composition. Furthermore, in order to suppress excessive growth of an alloy phase, about 3 percent by mass of Si relative to Al is contained in the coating bath, and the mandatory range thereof is specified to be 1.5 to 10 percent by mass relative to Al. In this regard, besides the above-described Al, Zn, Ca, Mg, and Si, some elements, e.g., Sr, V, Mn, Ni, Co, Cr, Ti, Sb, Ca, Mo, and B, may be added to the coating bath of the coated steel sheet according to the present invention, and the application can be performed insofar as the effects of the present invention are not impaired.

Meanwhile, as for a method for manufacturing the hot dip Al-Zn coated steel sheet in which the coated film is composed of the alloy phase present at the interface to the substrate steel sheet and the upper layer present on the alloy phase and Ca or Ca and Mg contained in the coated film are primarily present in the upper layer, the method is not specifically limited and any method may be used insofar as Ca or Ca and Mg can be primarily present in the upper layer. For example, a method in which Ca or Ca and Mg left in the alloy phase is reduced by increasing the cooling rate after coating so as to suppress formation of the alloy phase is mentioned. In this case, it is preferable that the cooling rate after coating is specified to be 10°C/sec or more.

Moreover, as for a method for manufacturing the hot dip Al-Zn coated steel sheet in which a high proportion of Ca or Ca and Mg contained in the coated film are present in the surface layer side as compared with that in the substrate steel sheet side, where the coated film is divided into two equal parts, the surface layer side and the substrate steel sheet side, in the thickness direction, the method is not specifically limited and any method may be used insofar as a high proportion of Ca or Ca and Mg can be present in the surface layer side as compared with that in the substrate steel sheet side, where the coated film is divided into two equal parts, the surface layer side and the substrate steel sheet side, in the thickness direction. For example, a method in which the solidification reaction of the coated film is specified to proceed from the substrate steel sheet side toward the surface layer side and, thereby, Ca or Ca and Mg are discharged to the surface layer side in association with proceeding of solidification is mentioned. This can be achieved in the cooling process after coating in a usual continuous hot dip coating operation.

In this regard, it is preferable that the temperature of the steel sheet entering the coating bath (hereafter referred to as an entering sheet temperature) is controlled within ±20°C relative to the coating bath temperature in order to prevent changes in coating bath temperature in the continuous hot dip coating operation.

Furthermore, as for a method for manufacturing the hot dip Al-Zn coated steel sheet in which Ca or Ca and Mg contained in the coated film include an intermetallic compound with at least one type selected from Zn, Al, and Si, the method is not specifically limited and any method may be used insofar as above-described intermetallic compound can be formed. For example, a method in which a coated steel sheet after formation of a coated film is subjected to a heat treatment at a temperature lower than the melting point of the coated film is mentioned. In this case, it is preferable to apply a heat treatment at a temperature 5°C to 50°C lower than the melting point of the coated film.

In this manner, the hot dip Al-Zn coated steel sheet exhibiting excellent corrosion resistance, according to the present invention, is obtained.

Furthermore, the above-described coated steel sheet can be made into a surface-treated steel sheet by being provided with a chemical conversion-treated film and/or a paint film containing an organic resin on the surface thereof. The chemical conversion-treated film can be formed by, for example, a chromate treatment or a chromium-free chemical conversion treatment, in which a chromate treatment liquid or a chromium-free chemical conversion treatment liquid is applied and a drying treatment at a steel sheet temperature of 80°C to 300°C is performed without washing with water. These chemical conversion-treated films may be a single layer or a multilayer. As for the multilayer, a plurality of chemical conversion treatments may be performed sequentially.

In addition, a single layer or a multilayer of paint film containing an organic resin can be formed on the surface of the coated layer or the chemical conversion-treated film. Examples of this paint films include polyester resin paint films, epoxy resin paint films, acrylic resin paint films, urethane resin paint films, and fluororesin paint films. Moreover, those prepared by modifying a part of the above-described resins with other resins, for example, epoxy-modified polyester resin paint films, can also be applied. Furthermore, as necessary, curing agents, curing catalysts, pigments, additives, and the like can be added to the above-described resins.

The painting method for forming the above-described paint film is not particularly specified. Examples of painting methods include roll coater painting, curtain flow painting, and spray painting. The paint film can be formed by painting a paint containing an organic resin and, thereafter, performing heat-drying by means of hot gas drying, infrared heating, induction heating, or the like.

However, the above-described method for manufacturing the surface-treated steel sheet is no more than an example and the method is not limited to this.

### [EXAMPLES]

Next, the present invention will be described in further detail with reference to examples.
A cold rolled steel sheet having a sheet thickness of 0.8 mm produced by a common method was passed through a continuous hot dip coating unit so as to perform a coating treatment with the coating bath composition shown in Table 1 to Table 3 and, thereby, a hot dip Al-Zn coated steel sheet was produced. In this regard, the line speed was specified to be 150 m/min and the amount of coating was specified to be 35 to 45 g/m² on one surface basis.

Furthermore, as for the method for manufacturing the hot dip Al-Zn coated steel sheet in which Ca or Ca and Mg contained in the coated film are present primarily in the upper layer, the cooling rate after coating was specified to be 15°C/sec.

Moreover, as for the method for manufacturing the hot dip Al-Zn coated steel sheet in which Ca or Ca and Mg contained in the coated film include an intermetallic compound with at least one type selected from Zn, Al, and Si, a coated steel sheet partly provided with a coated film was subjected to a heat treatment at a temperature 40°C lower than the melting point of the coated film.

Table 1 to Table 3 show the entering sheet temperature, the coating bath temperature, the cooling rate after coating, the heat treatment temperature after coating, the holding time, and the coated film melting point.

Regarding the thus obtained hot dip Al-Zn coated steel sheet, the proportion of presence of Ca or Ca and Mg in the upper layer and the surface layer side, presence or absence of intermetallic compounds, and the bonded portion corrosion resistance were evaluated in a manner as described below.

Regarding presence of Ca or Ca and Mg in the upper layer and the surface layer side, the intensity of Ca or Ca and Mg was detected by analysis through a coated film with a glow discharge optical emission spectrometry (GDS) apparatus, and when the intensity exceeded the each of the intensity detected with respect to the substrate steel sheet, it was assumed that presence was identified.

Regarding presence or absence of intermetallic compounds, the measurement was performed on the basis of X-ray diffraction, and names of intermetallic compounds, the presence of which were identified, are shown in Table 1. Furthermore, all intermetallic compounds cannot be identified by only the X-ray diffraction and, therefore, composition analysis was performed by energy dispersive X-ray spectroscopy (EDX) and wavelength dispersive X-ray spectroscopy (WDX) through the use of a scanning electron microscope (SEM), an electron probe microanalyzer (EPMA), an Auger electron spectroscope (AES), X-ray photoelectron spectroscopy (XPS), and a transmission electron microscope. Names of intermetallic compounds, the presence of which was identified by any analysis including the above-described X-ray diffraction, are shown in Table 2 and Table 3.

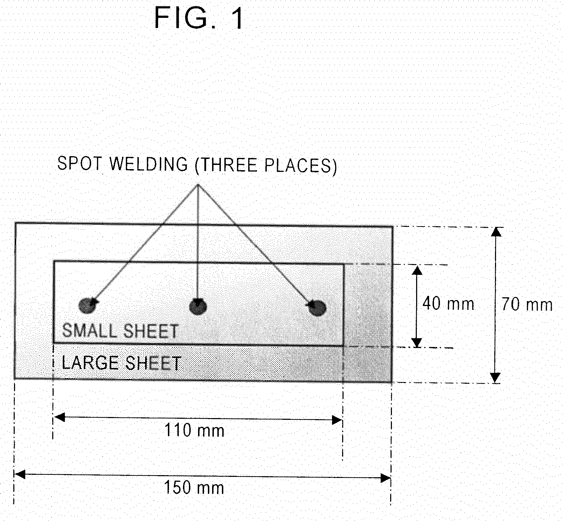

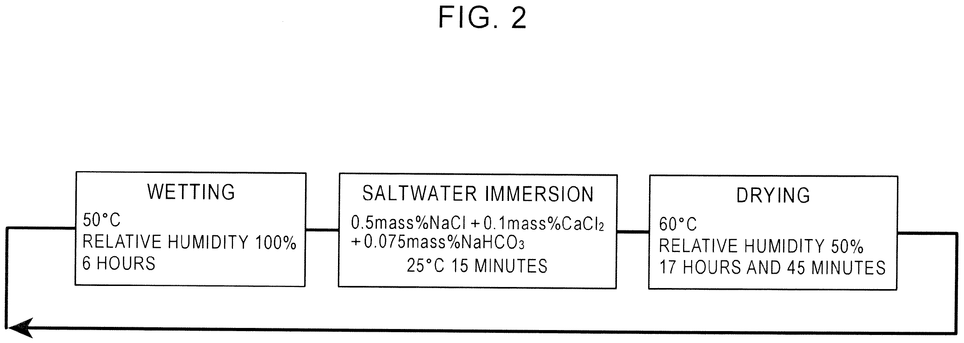

Regarding the bonded portion corrosion resistance, as shown in Fig. 1, a bonded material was prepared by bonding a coated surface of a galvannealed steel sheet (large sheet) having an amount of coating of 45 g/m² on one surface basis and a surface provided with the above-described coated film of the above-described hot dip Al-Zn coated steel sheet (small sheet: test target steel sheet) by spot welding. A chemical conversion treatment (zinc phosphate 2.0 to 3.0 g/m²) and electrodeposition (20 ± 1 µm) were performed and, thereafter, a corrosion resistance test was performed with the cycle shown in Fig. 2. The corrosion resistance test was started from wetting, 150 cycles were performed and, thereafter, the bonded portion corrosion resistance was evaluated as described below.

Regarding the test piece after the corrosion resistance test, the bonded portion was decomposed, the paint film and rust were removed and, subsequently, a corrosion depth of the substrate steel sheet was measured with a micrometer. Corroded portion of the test piece was divided into 10 sections, where a unit section was 20 mm × 15 mm. The maximum corrosion depth of each section was determined as a difference between the sheet thickness of a sound portion with no corrosion and the sheet thickness of a corroded portion. The Gumbel distribution was applied to the measured maximum corrosion depth data of each unit section, and extreme value statistics analysis was performed, so as to determine the mode of the maximum corrosion depth.

**Table 1 (No. 1)**

| No. | Entering sheet temperature (°C) | Coating bath composition (mass%) | | | | Coating bath | After coating | Heat treatment | | Coated film | | | | Corrosion depth after corrosion resistance test (mm) | Remarks |
|---|---|---|---|---|---|---|---|---|---|---|---|---|---|---|---|
| | | Al-Zn-Si | Ca | Mg | Total | Temperature (°C) | Cooling rate (°C/sec) | Temperature (°C)* | Holding time (sec) | Melting point (°C) | Proportion of Ca/Mg present in upper layer (%) | Proportion of Ca/Mg present in surface layer side (%) | Presence or absence of Ca/Mg-Zn,AI,Si intermetallic compound | | |
| 1 | 600 | 55mass%Al-remainder Zn-1.6mass%Si | 0 | 0 | 0 | 600 | 15 | - | - | 570 | 0 | 0 | non-solid solution Si | 0.64 | Comparative example |
| 2 | 510 | 27mass%Al-remainder Zn-0.7massSi | 5.85 | 0 | 5.85 | 520 | 15 | 450 | 2 | 490 | 97 | 52 | Al₂CaSi₂ | 0.45 | Comparative |
| 3 | 510 | | 9.31 | 0 | 9.31 | 520 | 15 | 450 | 2 | 490 | 95 | 56 | Al₂CaSi₂ | 0.42 | |
| 4 | 510 | | 4.36 | 3.68 | 8.04 | 520 | 15 | 450 | 2 | 490 | 96 | 54 | Al₂CaSi₂ Mg₂Si | 0.36 | Examples |
| 5 | 560 | 42mass%Al-remainder Zn-1.3mass%Si | 4.56 | 0 | 4.56 | 570 | 15 | 500 | 2 | 540 | 94 | 53 | Al₂CaSi₂ | 0.38 | |
| 6 | 560 | | 8.02 | 0 | 8.02 | 570 | 15 | 500 | 2 | 540 | 96 | 54 | Al₂CaSi₂ | 0.35 | |
| 7 | 560 | | 4.16 | 3.48 | 7.64 | 570 | 15 | 500 | 2 | 540 | 95 | 55 | Al₂CaSi₂ Mg₂ Si | 0.33 | |
| 8 | 580 | 48mass%Al-remainder Zn-1.5mass%Si | 4.18 | 0 | 4.18 | 590 | 15 | 520 | 2 | 560 | 95 | 57 | Al₂CaSi₂ | 0.31 | Example |
| 9 | 580 | | 5.69 | 0 | 5.69 | 590 | 15 | 520 | 2 | 560 | 93 | 52 | Al₂CaSi₂ | 0.33 | Example |
| 10 | 580 | | 4.25 | 3.61 | 7.86 | 590 | 15 | 520 | 2 | 560 | 94 | 54 | Al₂CaSi₂ Mg₂Si | 0.18 | Example |

| Al-Zn-Si | Ca | Mg | Total | Temperature (°C) | Cooling rate (°C/sec) | Temperature (°C)* | Holding time (sec) | Melting point (°C) | Proportion of Ca/Mg present in upper layer (%) | Proportion of Ca/Mg present in surface layer side (%) | Presence or absence of Ca/Mg-Zn,Al,Si intermetallic compound | | | | |
|---|---|---|---|---|---|---|---|---|---|---|---|---|---|---|---|
| 11 | 590 | 55mass%Al-remainder Zn-1.6mass%Si | 3.56 | 0 | 3.56 | 600 | 15 | 530 | 2 | 570 | 96 | 53 | Al₂CaSi₂ | 0.28 | Example |
| 12 | 590 | | 5.30 | 0 | 5.30 | 600 | 15 | 530 | 2 | 570 | 98 | 58 | Al₂CaSi₂ | 0.19 | Example |
| 13 | 590 | | 3.26 | 3.03 | 6.29 | 600 | 15 | 530 | 2 | 570 | 97 | 54 | Al₂CaSi₂ Mg₂Si | 0.09 | Example |
| 14 | 630 | 71mass%Al-remainder Zn-2.2mass%Si | 2.92 | 0 | 2.92 | 640 | 15 | 570 | 2 | 610 | 98 | 52 | Al₂CaSi₂ | 0.24 | Example |
| 15 | 630 | | 4.26 | 0 | 4.26 | 640 | 15 | 570 | 2 | 610 | 95 | 56 | Al₂CaSi₂ | 0.26 | Example |
| 16 | 630 | | 2.54 | 2.27 | 4.81 | 640 | 15 | 570 | 2 | 610 | 98 | 53 | Al₂CaSi₂ Mg₂Si | 0.06 | Example |
| 17 | 650 | 82mass%Al-remainder Zn-2.5mass%Si | 1.88 | 0 | 1.88 | 660 | 15 | 590 | 2 | 630 | 94 | 54 | Al₂CaSi₂ | 0.20 | Example |
| 18 | 650 | | 3.21 | 0 | 3.21 | 660 | 15 | 590 | 2 | 630 | 97 | 51 | Al₂CaSi₂ | 0.25 | Example |
| 19 | 650 | | 2.23 | 2.09 | 4.32 | 660 | 15 | 590 | 2 | 630 | 98 | 54 | Al₂CaSi₂ Mg₂Si | 0.08 | Example |
| 20 | 660 | 90mass%Al-remainder Zn-2.9mass%Si | 0.85 | 0 | 0.85 | 670 | 15 | 600 | 2 | 640 | 99 | 53 | Al₂CaSi₂ | 0.40 | Example |
| 21 | 660 | | 2.13 | 0 | 2.13 | 670 | 15 | 600 | 2 | 640 | 96 | 56 | Al₂CaSi₂ | 0.35 | Example |
| 22 | 660 | | 1.27 | 1.05 | 2.32 | 670 | 15 | 600 | 2 | 640 | 96 | 54 | Al₂CaSi₂ Mg₂Si | 0.33 | Example |

| | | | | | | | | | | | | | | | |
|---|---|---|---|---|---|---|---|---|---|---|---|---|---|---|---|
| *: achieved steel sheet temperature | | | | | | | | | | | | | | | |

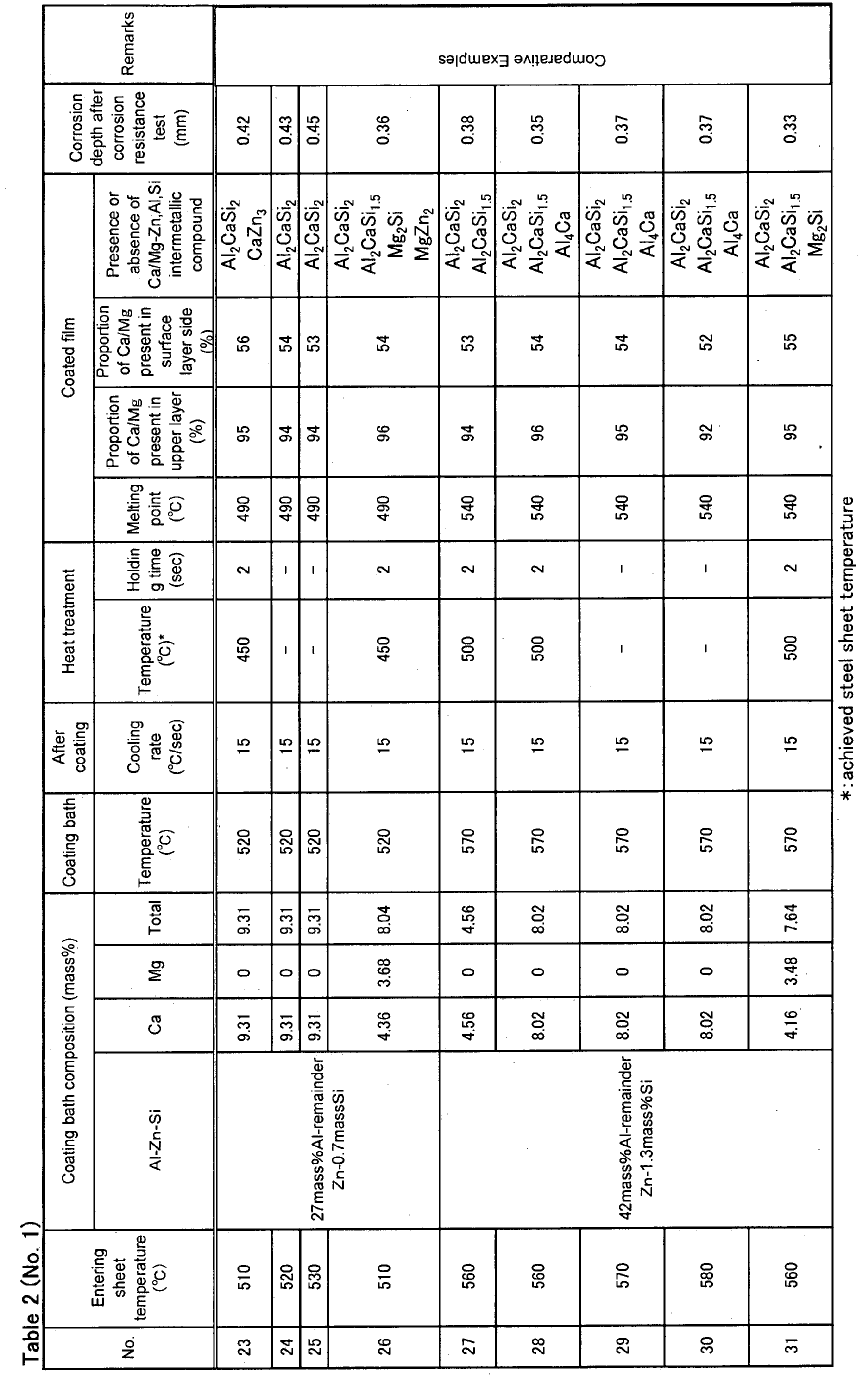

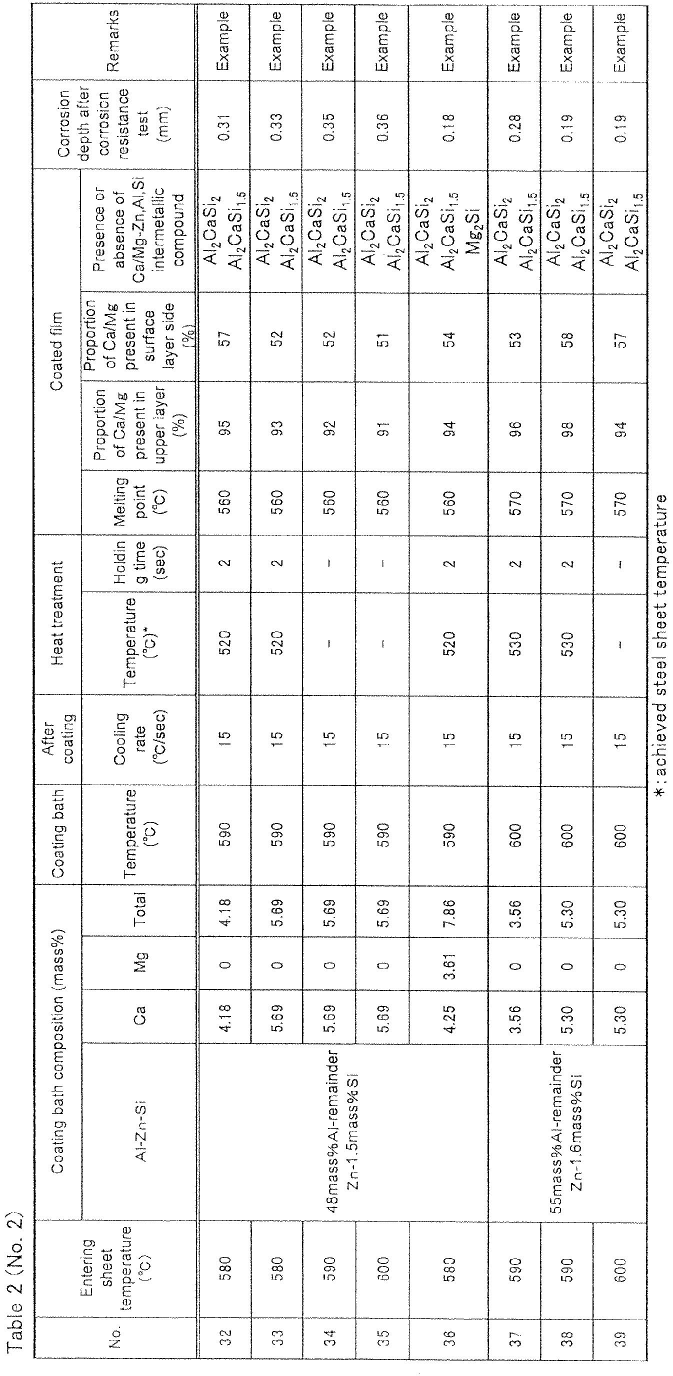

**Table 3 (No. 1)**

| Nº | Entering sheet temperature (°C) | Coating bath composition (mass%) | | | | Coating bath | After coating | Heat treatment | | Coated film | | | | Corrosion depth after corrosion resistance test (mm) | Remarks |
|---|---|---|---|---|---|---|---|---|---|---|---|---|---|---|---|
| | | Al-Zn-Si | Ca | Mg | Total | Temperature (°C) | Cooling rate (°C/sec) | Temperature (°C)* | Holding time (sec) | Melting point (°C) | Proportion of Ca/Mg present in upper layer (%) | Proportion of Ca/Mg present in surface layer side (%) | Presence or absence of Ca/Mg-Zn,Al,Si intermetallic compound | | |
| 40 | 610 | 55mass%Al-remainder Zn-1.6mass%Si | 5.30 | 0 | 5.30 | 600 | 15 | - | - | 570 | 94 | 56 | Al₂CaSi₂ Al₂CaSi_{1.5} | 0.21 | Example |
| 41 | 590 | | 3.26 | 3.03 | 6.29 | 600 | 15 | 530 | 2 | 570 | 97 | 54 | Al₂CaSi₂ Al₂CaSi_{1.5} Mg₂Si | 0.09 | Example |
| 42 | 630 | 71mass%Al-remainder Zn-2.2mass%Si | 2.92 | 0 | 2.92 | 640 | 15 | 570 | 2 | 610 | 98 | 52 | Al₂CaSi₂ Al₂CaSi_{1.5} | 0.24 | Example |
| 43 | 630 | | 4.26 | 0 | 4.26 | 640 | 15 | 570 | 2 | 610 | 95 | 56 | Al₂CaSi₂ Al₂CaSi_{1.5} | 0.26 | Example |
| 44 | 640 | | 4.26 | 0 | 4.26 | 640 | 15 | - | - | 610 | 95 | 55 | Al₂CaSi₂ Al₂CaSi_{1.5} | 0.27 | Example |
| 45 | 650 | | 4.26 | 0 | 4.26 | 640 | 15 | - | - | 610 | 93 | 53 | Al₂CaSi₂ Al₂CaSi_{1.5} | 0.28 | Example |
| 46 | 630 | | 2.54 | 2.27 | 4.81 | 640 | 15 | 570 | 2 | 610 | 98 | 53 | Al₂CaSi₂ Al₂CaSi_{1.5} Mg₂Si | 0.06 | Example |
| 47 | 650 | 82mass%Al-remainder Zn-2.5mass%Si | 1.88 | 0 | 1.88 | 660 | 15 | 590 | 2 | 630 | 94 | 54 | Al₂CaSi₂ Al₂CaSi_{1.5} | 0.20 | Example |
| 48 | 650 | | 3.21 | 0 | 3.21 | 660 | 15 | 590 | 2 | 630 | 97 | 52 | Al₂CaSi₂ Al₂CaSi_{1.5} CaZnSi | 0.25 | Example |
| 49 | 660 | | 3.21 | 0 | 3.21 | 660 | 15 | - | - | 630 | 95 | 52 | Al₂CaSi₂ Al₂CaSi_{1.5} CaZnSi | 0.26 | Example |
| 50 | 670 | | 3.21 | 0 | 3.21 | 660 | 15 | - | - | 630 | 95 | 51 | Al₂CaSi₂ Al₂CaSi_{1.5} CaZnSi | 0.27 | Example |
| 51 | 650 | | 2.23 | 2.09 | 4.32 | 660 | 15 | 590 | 2 | 630 | 98 | 54 | Al₂CaSi₂ Al₂CaSi_{1.5} Mg₂Si | 0.08 | Example |
| 52 | 660 | 90mass%Al-remainder Zn-2.9mass%Si | 0.85 | 0 | 0.85 | 670 | 15 | 600 | 2 | 640 | 99 | 53 | Al₂CaSi₂ Al₂CaSi_{1.5} CaSi₂ | 0.40 | Example |
| 53 | 660 | | 2.13 | 0 | 2.13 | 670 | 15 | 600 | 2 | 640 | 96 | 56 | Al₂CaSi₂ Al₂CaSi_{1.5} CaZnSi Ca₃Zn | 0.35 | Example |
| 54 | 660 | | 2.13 | 0 | 2.13 | 670 | 15 | - | - | 640 | 94 | 55 | Al₂CaSi_{1.5} CaZnSi | 0.35 | Example |
| 55 | 660 | | 2.13 | 0 | 2.13 | 670 | 15 | - | - | 640 | 92 | 52 | Al₂CaSi_{1.5} CaZnSi | 0.37 | Example |
| 56 | 660 | | 1.27 | 1.05 | 2.32 | 670 | 15 | 600 | 2 | 640 | 96 | 54 | Al₂CaSi₂ Al₂CaSi_{1.5} Mg₂Si Al₃Mg₂ | 0.33 | Example |

| | | | | | | | | | | | | | | | |
|---|---|---|---|---|---|---|---|---|---|---|---|---|---|---|---|
| *: achieved steel sheet temperature | | | | | | | | | | | | | | | |

As is clear from Table 1 to Table 3, regarding the invention examples, the mode of the maximum corrosion depth after 150 cycles of corrosion resistance test is smaller than 0.5 mm and, therefore, the hot dip Al-Zn coated steel sheet exhibiting excellent bonded portion corrosion resistance is obtained.

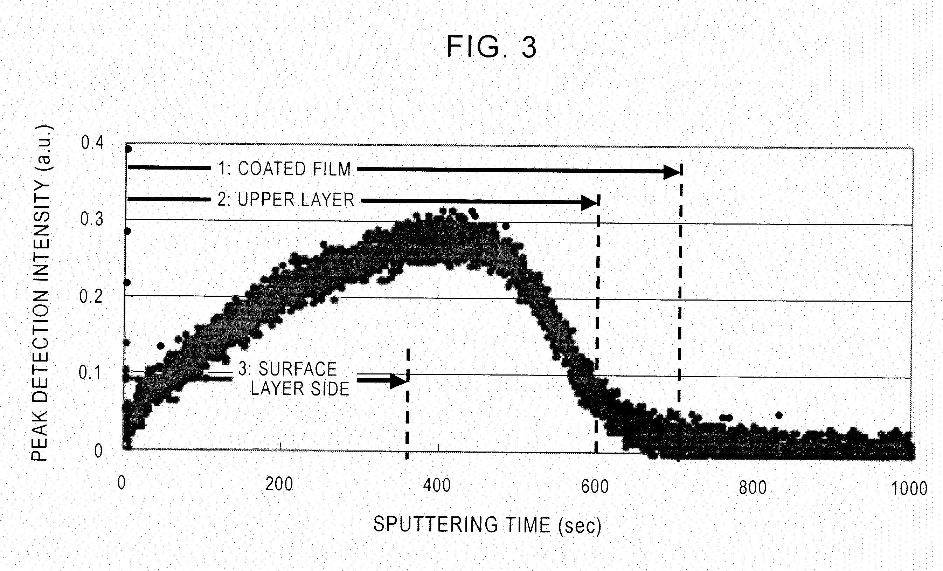

Meanwhile, Fig. 3 shows the distribution in the depth direction of Ca, where No. 18 in Table 1 was analyzed (sputtering rate = 0.05 µ/sec) through the coated film with a glow discharge optical emission spectrometry apparatus. In Fig. 3, it was assumed that the coated film thickness was up to 700 sec at which the waveform of the detection intensity of Ca converged on the value detected from the substrate steel sheet, and the upper layer thickness was up to 600 sec at which the waveform of the detection intensity of Ca had an inflection point. The cross-section of the coated film at this time was observed with a scanning electron microscope. As a result, the coated film was about 35 µm, and the coating upper layer therein was about 30 µm. In this regard, the detection intensity was 626 as for the coated film, 606 as for the upper layer, and 322 as for the surface layer side described later. As is clear from the above-described results, 97% (= 606/626) of the whole detection peak was detected not from the alloy phase (corresponding to the sputtering time of 600 to 700 sec) present at the interface, but from the coating upper layer (corresponding to the sputtering time of 0 to 600 sec), and 51% (322/626) of the whole detection peak was detected from the surface layer side (thickness = 17.5 µm, corresponding to the sputtering time of 0 to 350 sec), where the coated film was divided into two equal parts, the surface layer side and the substrate steel sheet side, on a thickness basis.

### [Industrial Applicability]

According to the present invention, excellent bonded portion corrosion resistance is obtained and, therefore, it is possible to apply to wide fields with an emphasis on the construction material field and the automobile field.

## Claims

1. A hot dip Al-Zn coated steel sheet having a coated film consisting of 45 to 95 percent by mass of Al, 0.01 to 10 percent by mass of Ca or Ca and Mg in total, 1.5 to 10 percent by mass of Si relative to Al, the rest of the coated film being Zn, **characterized in that** the coated film comprises an intermetallic compound comprising Ca and at least one type selected from Zn, Al and Si, and
**in that** the coated film comprises an alloy phase present at the interface to a substrate steel sheet and an upper layer on top of the alloy phase and Ca or Ca and Mg are present in the upper layer, wherein 90% or more of the whole detected peaks of Ca or Ca and Mg are detected in the upper layer by analysis with a glow discharge optical emission spectrometry apparatus.

2. The hot dip Al-Zn coated steel sheet according to Claim 1, **characterized in that** more than 50% of the whole detected peaks of Ca or Ca and Mg are detected in the surface layer side, where the coated film is divided into two equal parts, the surface layer side and the substrate steel sheet side, in the thickness direction.

3. The hot dip Al-Zn coated steel sheet according to Claim 1, **characterized in that** the intermetallic compound is at least one type of Al₄Ca, Al₂Ca, Al₂CaSi₂, Al₂CaSi_{1.5}, Ca₃Zn, CaZn₃, CaSi₂, and CaZnSi.

4. The hot dip Al-Zn coated steel sheet according to Claim 3, **characterized in that** the intermetallic compound is Al₂CaSi₂ and/or Al₂CaSi_{1.5}.

## Patentansprüche

1. Feuerverzinktes Al-Zn-beschichtetes Stahlblech mit einer Beschichtung bestehend aus 45 bis 95 Massenprozent an Al, 0,01 bis 10 Massenprozent an Ca oder einer Summe aus Ca und Mg, 1,5 bis 10 Massenprozent an Si in Bezug auf Al, während der Rest der Beschichtung Zn ist,
**dadurch gekennzeichnet, dass**
die Beschichtung eine intermetallische Verbindung ist mit Ca und mindestens einer Art, die ausgewählt ist aus Zn, Al und Si, und
die Beschichtung eine Legierungsphase aufweist, die an der Grenzfläche zu einem Trägerstahlblech und einer oberen Schicht auf der Legierungsphase vorhanden ist und Ca oder Ca und Mg in der oberen Schicht vorhanden sind, wobei 90 % oder mehr des gesamten erfassten Höchstwertes an Ca oder Ca und Mg in der oberen Schicht durch Analyse mittels einer optischen Emissionsspektrometrievorrichtung mit Glimmentladung detektierbar sind.

2. Feuerverzinktes Al-Zn-beschichtetes Stahlblech nach Anspruch 1, **dadurch gekennzeichnet, dass** mehr als 50 % der gesamten erfassten Höchstwerte an Ca oder Ca und Mg auf Seite der Oberflächenschicht detektierbar sind, in der die Beschichtung in zwei gleiche Teile, d.h. einen oberflächenschichtseitigen Teil und einen trägerstahlblechseitigen Teil, in der Dickenrichtung unterteilt ist.

3. Feuerverzinktes Al-Zn-beschichtetes Stahlblech nach Anspruch 1, **dadurch gekennzeichnet, dass** die intermetallische Verbindung von der Art Al₄Ca und/oder Al₂Ca und/oder Al₂CaSi₂ und/oder Al₂CaSi_{1,5} und/oder Ca₃Zn und/oder CaZn₃ und/oder CaSi₂ und/oder CaZnSi ist.

4. Feuerverzinktes Al-Zn-beschichtetes Stahlblech nach Anspruch 3, **dadurch gekennzeichnet, dass** die intermetallische Verbindung Al₂CaSi₂ und/oder Al₂CaSi_{1,5} ist.

## Revendications

1. Tôle d'acier revêtue d'Al-Zn par immersion à chaud ayant un film de revêtement constitué de 45 à 95 pour cent en masse d'Al, 0,01 à 10 pour cent en masse de Ca ou de Ca et Mg au total, 1,5 à 10 pour cent en masse de Si par rapport à Al, le reste du film revêtu étant du Zn, **caractérisée en ce que** le film de revêtement comprend un composé intermétallique comprenant du Ca et au moins un type choisi parmi Zn, Al et Si,
**en ce que** le film de revêtement comprend une phase d'alliage présente à l'interface avec une tôle d'acier substrat et une couche supérieure sur le dessus de la phase d'alliage et du Ca ou du Ca et du Mg sont présents dans la couche supérieure, 90 % ou plus de la totalité des pics détectés de Ca ou Ca et Mg étant détectés dans la couche supérieure par analyse au moyen d'un appareil de spectrométrie d'émission optique à décharge luminescente.

2. Tôle d'acier revêtue d'Al et Zn par immersion à chaud selon la revendication 1, **caractérisée en ce que** plus de 50 % de la totalité des pics de Ca ou Ca et Mg détectés sont détectés du côté de la couche de surface, le film revêtu étant divisé en deux parties égales, le côté de la couche de surface et le côté de la tôle d'acier substrat, dans le sens de l'épaisseur.

3. Tôle d'acier revêtue d'Al et Zn par immersion à chaud selon la revendication 1, **caractérisée en ce que** le composé intermétallique est au moins un type parmi Al₄Ca, Al₂Ca, Al₂CaSi₂, Al₂CaSi_{1,5}, Ca₃Zn, CaZn₃, CaSi₂ et CaZnSi.

4. Tôle d'acier revêtue d'Al et Zn par immersion à chaud selon la revendication 3, **caractérisée en ce que** le composé intermétallique est Al₂CaSi₂ et/ou Al₂CaSi_{1,5}.
